(19) Europäisches Patentamt
European Patent Office
Office européen des brevets

(11) Veröffentlichungsnummer: **0 415 204 A2**

(12) **EUROPÄISCHE PATENTANMELDUNG**

(21) Anmeldenummer: **90115775.0**

(22) Anmeldetag: **17.08.90**

(51) Int. Cl.5: **C08G 77/38**, C08G 59/42, C08G 77/14

(30) Priorität: **18.08.89 DE 3927312**

(43) Veröffentlichungstag der Anmeldung: **06.03.91 Patentblatt 91/10**

(84) Benannte Vertragsstaaten: **BE CH DE ES FR GB IT LI NL**

(71) Anmelder: **WACKER-CHEMIE GMBH**
**Prinzregentenstrasse 22**
**W-8000 München 22(DE)**

(72) Erfinder: **Herzig, Christian, Dr. Dipl.-Chem.**
**Schröckenbauer 1**
**W-8221 Taching(DE)**
Erfinder: **Esterbauer, Josef**
**Unterweitzberg 34**
**A-5122 Hochburg(AT)**

(54) **Anhydridfunktionelle Organo(poly)siloxane, Verfahren zu ihrer Herstellung und Verwendung dieser Organo(poly)siloxane.**

(57) Beschrieben werden neue anhydridfunktionelle Organo(poly)siloxane aus durchschnittlichen Einheiten der allgemeinen Formel

$$A_aR_bSiO_{\frac{4-(a+b)}{2}} \quad (I),$$

wobei R gleich oder verschieden ist, einen einwertigen, gegebenenfalls halogenierten Kohlenwasserstoffrest mit 1 bis 18 Kohlenstoffatom(en) je Rest bedeutet,
A einen Rest der Formel

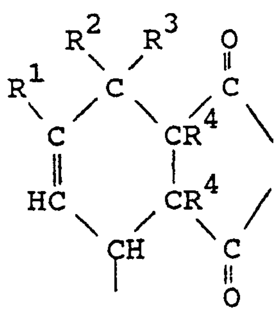

und/oder

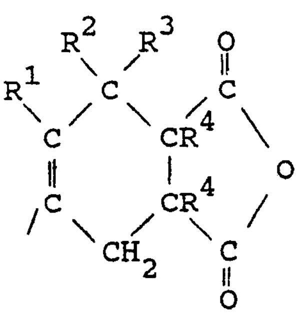

bedeutet, wobei $R^1$, $R^2$, $R^3$ und $R^4$ die im Anspruch 1 dafür angegebene Bedeutung haben,
a 0 oder 1, durchschnittlich 0,003 bis 1,0,
b 0, 2 oder 3, durchschnittlich 0,05 bis 2,5, und
die Summe a + b durchschnittlich nicht größer als 3 ist,
mit der Maßgabe, daß mindestens ein Rest A je Molekül enthalten ist.

EP 0 415 204 A2

# ANHYDRIDFUNKTIONELLE ORGANO(POLY)SILOXANE, VERFAHREN ZU IHRER HERSTELLUNG UND VERWENDUNG DIESER ORGANO(POLY)SILOXANE

Anhydridfunktionelle Organopolysiloxane, wie norbornen- und norbornananhydridfunktionelle Organopolysiloxane sind bekannt. Erstere werden, wie in Chemical Abstracts 72, 32777m, 1970 beschrieben, durch Umsetzung von Maleinsäureanhydrid mit SiC-gebundenen Cyclopentadiengruppen aufweisendem Organopolysiloxan hergestellt, wobei ein Organopolysiloxan mit 5-Norbornen-2,3-carbonsäureanhydrid-Gruppen erhalten wird. Letztere werden gemäß US-A 4 381 396 (ausgegeben 26. April 1983, Hong-Son Ryang, General Electric Company) durch Anlagerung von Norbornenanhydriden an Si-gebundenen Wasserstoff aufweisendenen Silanen oder Organopolysiloxanen in Gegenwart von Platinkatalysatoren hergestellt. In US-A 4 404 350 (ausgegeben 13. September 1983, Hong-Son Ryang, General Electric Company) sind Organopolysiloxan-Polyimid-Copolymere auf Basis von Norbornananhydrid-endständigen Organopolysiloxanen, organischen Diaminen und gegebenenfalls anderen aromatischen Bisanhydriden beschrieben. Aus US-A 4 511 701 (ausgegeben 16. April 1985, Hong-Son Ryang, General Electric Company) sind härtbare Epoxyharz-Massen unter Verwendung von norbornananhydridfunktionellen Organopolysiloxanen bekannt. In EP-A 176 085 (offengelegt am 2. April 1986, Sato Fumie, Nissan Chemical Industries Ltd.) ist ein 4-Silylsubstituiertes-1,2,3,6-tetrahydrophthalsäureanhydrid beschrieben, das nach einem Drei-Stufen-Verfahren hergestellt wird. In der 1. Stufe wird 1,4-Dichlorbutin an Si-gebundenen Wasserstoff aufweisendes Silan in Gegenwart von Platinkatalysator addiert, das Additionsprodukt in der 2. Stufe mittels Zink zu einem 2-Silylsubstituierten-1,3-butadien reduziert und in einer 3. Stufe wird in einer Diels-Alder-Reaktion Maleinsäureanhydrid addiert.

Die Addition von 3-Methyl-1-butin-3-ol an Si-gebundenen Wasserstoff aufweisenden Organosiliciumverbindungen in Gegenwart von Hexachloroplatinsäure ist in US-A 2 823 218 (ausgegeben 11. Februar 1958, J. L. Speier et al., Dow Corning Corporation) beschrieben. Weiterhin ist aus Chemical Abstracts 51, 9474f, 1957 bekannt, daß 2-Triethylsilyl-3-methyl-1,3-butadien mittels Wasserabspaltung durch Erhitzen von 2-Triethylsilyl-3-methyl-1-buten-3-ol in Gegenwart von $KHSO_4$ erhältlich ist.

Es bestand die Aufgabe, anhydridfunktionelle Organo(poly)siloxane bereitzustellen, die in einem einfachen Eintopf-Verfahren aus leicht zugänglichen Stoffen, ohne große Mengen an teurem Platinkatalysator und in guten Ausbeuten herstellbar sind. Dieses Aufgabe wird durch die Erfindung gelöst.

Gegenstand der Erfindung sind anhydridfunktionelle Organo(poly)siloxane aus durchschnittlichen Einheiten der allgemeinen Formel

$$A_aR_bSiO_{\frac{4-(a+b)}{2}} \quad (I) ,$$

wobei R gleich oder verschieden ist, einen einwertigen, gegebenenfalls halogenierten Kohlenwasserstoffrest mit 1 bis 18 Kohlenstoffatom(en) je Rest bedeutet,
A einen Rest der Formel

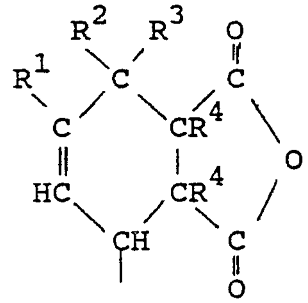

und/oder

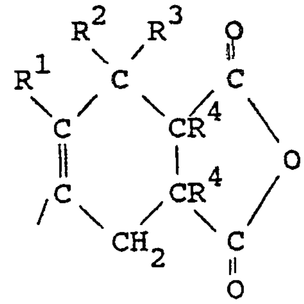

bedeutet, wobei $R^1$ ein Wasserstoffatom oder einen einwertigen, gegebenenfalls halogenierten Kohlenwasserstoffrest mit 1 bis 12 Kohlenstoffatom(en) je Rest und $R^2$ ein Wasserstoffatom oder einen einwertigen Kohlenwasserstoffrest mit 1 bis 12 Kohlenstoffatom(en) je Rest bedeutet oder die beiden Reste $R^1$ und $R^2$ zusammen einen zweiwertigen Kohlenwasserstoffrest mit 3 bis 5 Kohlenstoffatomen je Rest darstellen, $R^3$

ein Wasserstoffatom oder einen einwertigen Kohlenwasserstoffrest mit 1 bis 4 Kohlenstoffatom(en) je Rest bedeutet, mit der Maßgabe, daß $R^3$ ein Wasserstoffatom ist, wenn die beiden Reste $R^1$ und $R^2$ zusammen einen zweiwertigen Kohlenwasserstoffrest mit 3 bis 5 Kohlenstoffatomen je Rest darstellen,
$R^4$ gleich oder verschieden ist, ein Wasserstoffatom, ein Halogenatom oder einen Cyanrest bedeutet,
a 0 oder 1, durchschnittlich 0,003 bis 1,0,
b 0, 1, 2 oder 3, durchschnittlich 0,05 bis 2,5, und
die Summe a + b durchschnittlich nicht größer als 3 ist,
mit der Maßgabe, daß mindestens ein Rest A je Molekül enthalten ist.

Gegenstand der Erfindung ist weiterhin ein Verfahren zur Herstellung von anhydridfunktionellen Organo(poly)siloxanen, dadurch gekennzeichnet, daß zunächst
in einer 1. Stufe
sekundärer oder tertiärer acetylenischer Alkohol (1) an ein Organo(poly)siloxan (2) mit mindestens einem Si-gebundenen Wasserstoffatom in Gegenwart von die Anlagerung von Si-gebundenem Wasserstoff an aliphatische Mehrfachbindung förderndem Katalysator (3) angelagert wird, und dann
in einer 2. Stufe
die Alkenolgruppen des in der 1. Stufe erhaltenen Organo(poly)siloxans mit Maleinsäureanhydrid oder substituiertem Maleinsäureanhydrid gegebenenfalls in Gegenwart von saurem Katalysator umgesetzt werden, wobei Wasser intramolekular aus den Alkenolgruppen abgespalten und Maleinsäureanhydrid bzw. substituiertes Maleinsäureanhydrid dann entsprechend einer Diels-Alder-Reaktion daran addiert wird und gegebenenfalls
in einer 3. Stufe
das nach Beendigung der 2. Stufe vorliegende, Anhydridgruppen aufweisende Organo(poly)siloxan mit Organopolysiloxan (4) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten äquilibriert wird.

Gegenstand der Erfindung ist weiterhin die Verwendung der anhydridfunktionellen Organo(poly)siloxane zur Herstellung von Organopolysiloxan-Polyimid-Copolymeren und als Härtungsmittel für Epoxyharz.

Im Gegensatz zu dem Verfahren gemäß der oben genannten EP-A 176 085 sind die erfindungsgemäßen Organo(poly)siloxane in einem einfachen Verfahren zugänglich. Es war überraschend und war weder aus den oben genannten Druckschriften EP-A 176 085, US-A 2 823 218 oder Chemical Abstracts 51, 9474f, 1957 noch aus der Kombination dieser Druckschriften zu entnehmen, daß Maleinsäureanhydrid zugegeben werden kann, ohne daß vorher ein butadienylfunktionelles Organo(poly)siloxan isoliert werden muß, daß das gesamte Verfahren in einem Reaktionsgefäß, d.h. in einem sogenannten Eintopfverfahren, durchgeführt werden kann, und daß die anhydridfunktionellen Organo(poly)siloxane dabei in guten Ausbeuten erhalten werden.

Beispiele für Reste R sind Alkylreste, wie der Methyl-, Ethyl-, n- propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl- Naphthyl- und Anthryl- und Phenanthrylrest; Alkarylreste, wie o-, m-, p-Tolylreste, Xylylreste und Ethylphenylreste; Aralkylreste, wie der Benzylrest, der $\alpha$- und der $\beta$-Phenylethylrest. Bevor zugte Beispiele für Reste R sind der Methyl- und Phenylrest.

Beispiele für halogenierte Reste R sind Halogenalkylreste, wie der 3,3,3-Trifluor-n-propylrest, der 2,2,2,2′,2′,2′-Hexafluorisopropylrest, der Heptafluorisopropylrest, und Halogenarylreste, wie der o-, m-, und p-Chlorphenylrest.

Beispiele für Kohlenwasserstoffreste $R^1$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest; Arylreste, wie der Phenylrest; Alkarylreste, wie o-, m- und p-Tolylreste, Xylylreste und Ethylphenylreste; Aralkylreste wie der Benzylrest.

Beispiele für halogenierte Kohlenwasserstoffreste $R^1$ sind Halogenalkylreste, wie der 1,1,1-Trichlormethylrest, der 3,3,3-Trifluor-n-propylrest, der 2,2,2,2′,2′,2′-Hexafluorisopropylrest und der Heptafluorisopropylrest und Halogenarylreste, wie der o-, m-, und p-Chlorphenylrest.

Vorzugsweise ist der Rest $R^1$ ein Methyl- oder Phenylrest, bevorzugt ein Methylrest.

Beispiele für Kohlenwasserstoffreste $R^2$ sind Alkylreste, wie der Methyl-, Ethyl-, n-Propyl-, iso-Propyl-,

1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest.

Beispiele für Kohlenwasserstoffreste $R^3$ sind Alkylreste, wie der Methyl-, Ethyl-, n-Propyl-, iso-Propyl-, 1-n-Butyl-, 2-n-Butyl-, iso-Butyl- und tert.-Butylrest.

Beispiele für Reste, bei denen die Rest $R^1$ und $R^2$ zusammen einen zweiwertigen Kohlenwasserstoffrest mit 3 bis 5 Kohlenstoffatomen darstellen, sind solche der Formel $-(CH_2)_3-$, $-(CH_2)_4-$, $-CH(CH_3)-(CH_2)_3-$, $-CH_2-CH(CH_3)-(CH_2)_2-$und $-(CH_2)_5-$, wobei $-(CH_2)_4-$ bevorzugt ist.

Vorzugsweise ist der Rest $R^2$ ein Wasserstoffatom oder ein Methylrest, bevorzugt ein Wasserstoffatom.

Vorzugsweise sind die Reste $R^3$ und $R^4$ jeweils ein Wasserstoffatom.

Die Formel (I) für die erfindungsgemäßen anhydridfunktionellen Organo(poly)siloxane beinhaltet lineare, verzweigte und auch cyclische Organo(poly)siloxane.

Das durchschnittliche Molekulargewicht der erfindungsgemäßen anhydridfunktionellen Organo(poly)siloxane beträgt vorzugs weise 298 bis 100 000 g/Mol, bevorzugt 462 bis 20 000 g/Mol.

Beispiele für anhydridfunktionelle Organo(poly)siloxane sind solche der Formel

$XMe_2SiO(SiMe_2O)_8SiMe_2X$

$XMe_2SiOSiMe_2X$

$XMe_2SiO(SiMe_2O)_{65}SiMe_2X$

$Me_3SiOSiMeXOSiMe_3$

$Me_3SiO(SiMeXO)_7(SiMe_2O)_{15}SiMe_3$

$Me_3SiO(SiMeXO)_5SiMe_3$

$Me_3SiO(SiMeXO)_3(SiMe_2O)_{200}SiMe_3$

$XMe_2SiO(SiMeXO)_3(SiMe_2O)_{95}SiMe_2X$

$(SiMeXO)_4$

$XMe_2SiO(SiMe_2O)_{19}(SiMePhO)_5SiMe_2X$

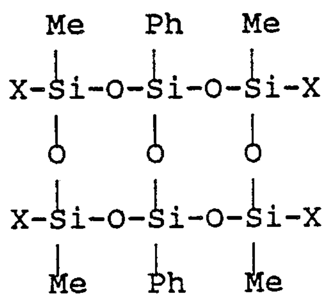

$YMe_2SiO(SiMe_2O)_6SiMe_2Y$ und

$ZMe_2SiO(SiMe_2O)_8SiMe_2Z$ ,

wobei Me ein Methylrest, Ph ein Phenylrest,

X ein Rest der Formel

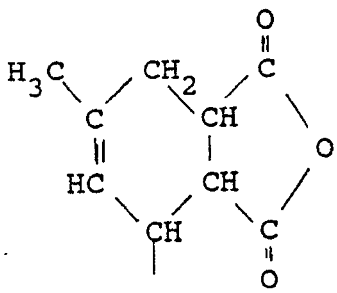

und/oder

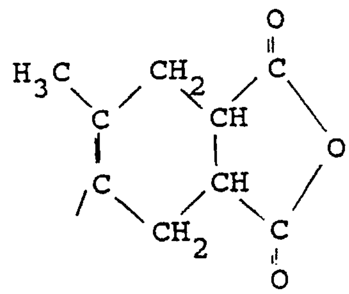

Y ein Rest der Formel

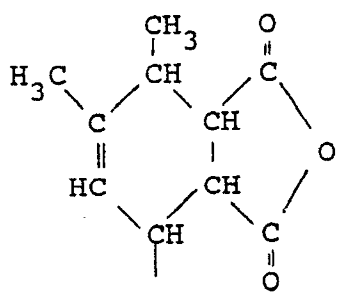

und/oder

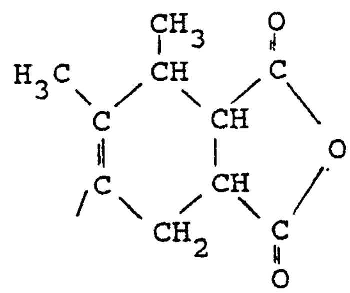

und Z ein Rest der Formel

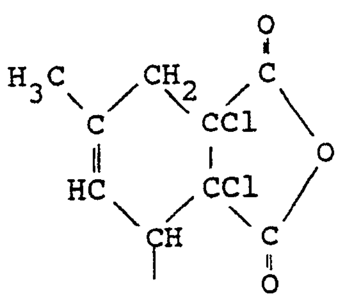

und/oder

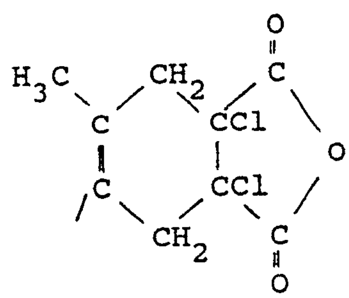

bedeutet.

Bevorzugt als anhydridfunktionelle Organo(poly)siloxane sind solche der allgemeinen Formel

$A_dR_{3-d}SiO(SiR_2O)_n(SiRAO)_mSiR_{3-d}A_d$ (II),

wobei R und A die oben dafür angegebene Bedeutung haben,

d 0 oder 1

n 0 oder eine ganze Zahl von 1 bis 1500 und

m 0 oder eine ganze Zahl von 1 bis 200 bedeutet,

mit der Maßgabe, daß mindestens ein Rest A je Molekül enthalten ist und das Verhältnis n:m nicht größer als 200 ist.

Als sekundäre oder tertiäre acetylenische Alkohole (1) werden bei dem erfindungsgemäßen Verfahren vorzugsweise solche der allgemeinen Formel

$HC{\equiv}C\text{-}C(OH)R^1\text{-}CHR^2R^3$ ,

wobei $R^1$, $R^2$ und $R^3$ die oben dafür angegebene Bedeutung haben, verwendet.

Beispiele für sekundäre und tertiäre acetylenische Alkohole (1), die bei dem erfindungsgemäßen Verfahren eingesetzt werden, sind 2-Methyl-3-butin-2-ol, 3-Methyl-4-pentin-3-ol, 1-Ethinylcyclohexan-1-ol, 3-Ethyl-4-pentin-3-ol, 2-Phenyl-3-butin-2-ol, 1-Ethinylcyclopentan-1-ol, und 3-Phenyl-4-pentin-3-ol. Bevorzugt ist 2-Methyl-3-butin-2-ol, 3-Methyl-4-pentin-3-ol und 1-Ethinylcyclohexan-1-ol, wobei 2-Methyl-3-butin-2-ol

besonders bevorzugt ist.

Verfahren zum Herstellen von acetylenischen Alkoholen (1) sind dem Fachmann bekannt. Acetylenische Alkohole (1) werden beispielsweise nach dem Reppe-Verfahren aus Acetylen und Carbonylverbindungen nach folgendem Reaktionsschema erhalten:

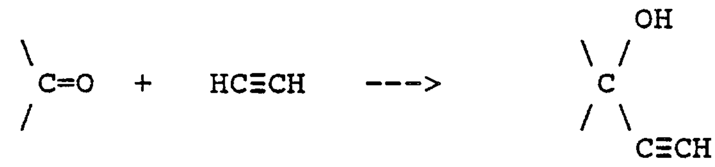

Als Organo(poly)siloxane (2) mit mindestens einem Si-gebundenen Wasserstoffatom können auch bei dem erfindungsgemäßen Verfahren die gleichen linearen, verzweigten oder cyclischen Organo(poly)siloxane mit mindestens einem Si-gebundenen Wasserstoffatom verwendet werden, die bisher bei der Anlagerung von aliphatische Mehrfachbindung aufweisende Verbindungen an Si-gebundenen Wasserstoff aufweisende Organo(poly)siloxane in Gegenwart von die Anlagerung von Si-gebundenen Wasserstoff an aliphatische Mehrfachbindung fördernde Katalysatoren eingesetzt werden konnten. Vorzugsweise werden als Organo(poly)siloxane (2) mit mindestens einem Si-gebundenen Wasserstoffatom solche der allgemeinen Formel

$$H_eR_fSiO_{\frac{4-(e+f)}{2}} \qquad (III),$$

wobei R die oben dafür genannte Bedeutung hat,
e 0 oder 1, durchschnittlich 0,003 bis 1,0
f 0, 1, 2 oder 3, durchschnittlich 0,05 bis 2,5 und
die Summe von e+f nicht größer als 3 ist, eingesetzt.

In der obigen Formel sind neben linearen und verzweigten Organo(poly)siloxanen auch cyclische Organo(poly)siloxane enthalten. Die durchschnittliche Viskosität der Organo(poly)siloxane (2) beträgt vorzugsweise 0,5 bis 1 000 000 mPa•s, bevorzugt 0,5 bis 10 000 mPa•s.

Als Organo(poly)siloxane (2) mit mindestens einem Si-gebundenen Wasserstoff werden bevorzugt solche der allgemeinen Formel

$H_dR_{3-d}SiO(SiR_2O)_o(SiRHO)_pSiR_{3-d}H_d$ (IV),

wobei R und d die oben dafür angegebene Bedeutung haben,
o 0 oder eine ganze Zahl von 1 bis 1500 und
p 0 oder eine ganze Zahl von 1 bis 200 bedeutet,
mit der Maßgabe, daß das Verhältnis o:p nicht größer als 200 ist, eingesetzt. Besonders bevorzugt sind in der obigen Formel die Reste R Methyl- oder Phenylreste.

Beispiele für Organo(poly)siloxane (2) sind Mischpolymerisate aus Dimethylhydrogensiloxan- und Dimethylsiloxaneinheiten, Mischpolymerisate aus Dimethylhydrogensiloxan-, Dimethylsiloxan- und Methylhydrogensiloxaneinheiten, Mischpolymerisate aus Trimethylsiloxan- und Methylhydrogensiloxaneinheiten, Mischpolymerisate aus Trimethylsiloxan-, Dimethylsiloxan- und Methylhydrogensiloxaneinheiten, Mischpolymerisate aus Dimethylhydrogensiloxan-, Dimethylsiloxan-und Phenylmethylsiloxaneinheiten, cyclische Methylhydrogenpolysiloxane, Mischpolymerisate aus Dimethylhydrogensiloxan-und Methylsiloxaneinheiten und Mischpolymerisate aus Dimethylhydrogensiloxan- und Phenylsiloxaneinheiten.

Verfahren zum Herstellen von Organo(poly)siloxanen (2), auch von solchen der bevorzugten Art, sind allgemein bekannt. Acetylenischer Alkohol (1) wird bei der in der 1. Stufe des erfindungsgemäßen Verfahrens durchgeführten Additionsreaktion vorzugsweise in solchen Mengen eingesetzt, daß 0,9 bis 3,0 Mol, bevorzugt 1,05 bis 1,10 Mol acetylenischer Alkohol (1) je Grammatom Si-gebundener Wasserstoff in dem Organo(poly)siloxan (2) vorliegt.

Als die Anlagerung von Si-gebundenem Wasserstoff an aliphatische Mehrfachbindung fördernde Katalysatoren (3) können auch bei dem erfindungsgemäßen Verfahren die gleichen Katalysatoren eingesetzt werden, die auch bisher zur Förderung der Anlagerung von Si-gebundenen Wasserstoff an aliphatische Mehrfachbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf

Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6$*$6H_2O$, $Na_2PtCl_4$*$4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe; einschließlich Umsetzungsprodukten aus $H_2PtCl_6$*$6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin gemäß US-A 4 292 434, wie das Umsetzungsprodukt aus in 1-Octen gelöstem Platintetrachlorid mit sec.-Butylamin, oder Ammonium-Platinkomplexe gemäß EP-B 110 370.

Der Katalysator (3) wird vorzugsweise in Mengen von 0,5 bis 200 Gew.-ppm (Gewichtsteilen je Million Gewichtsteilen), bevorzugt in Mengen von 1 bis 50 Gew.-ppm eingesetzt, jeweils berechnet als elementares Platin und bezogen auf das Gesamtgewicht von acetylenischem Alkohol (1) und Organo(poly)siloxan (2) mit mindestens einem Si-gebundenem Wasserstoffatom.

Die Additionsreaktion (oder Hydrosilylierungsreaktion) in der 1. Stufe des erfindungsgemäßen Verfahrens wird vorzugsweise beim Druck der umgebenden Atmosphäre, also etwa bei 1020 hPa (abs.), durchgeführt, sie kann aber auch bei höheren oder niedrigeren Drücken durchgeführt werden. Ferner wird die Additionsreaktion vorzugsweise bei einer Temperatur von 70 °C bis 150 °C, bevorzugt 100 °C bis 120 °C, durchgeführt.

Bei der in der 1. Stufe des erfindungsgemäßen Verfahrens durchgeführten Hydrosilylierung entsteht ein Isomerengemisch, wie folgt schematisch dargestellt:

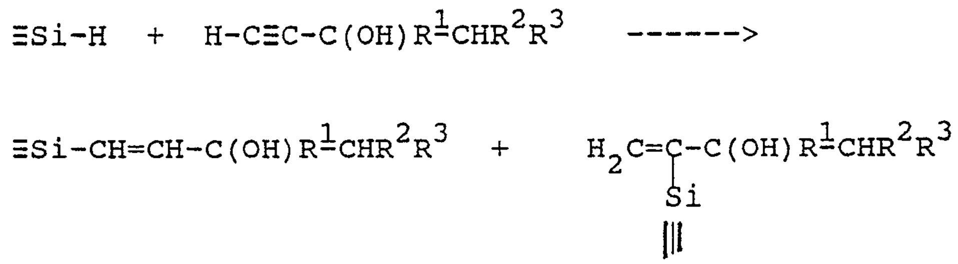

(B)

Die in der 1. Stufe erhaltenen Organo(poly)siloxane enthalten somit Si-gebundene Alkenolgruppen der Formel:

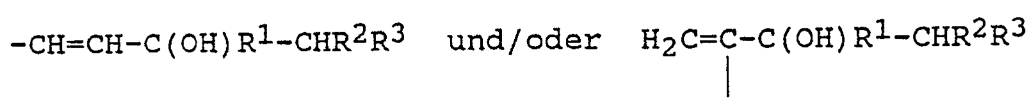

Von dem in der 1. Stufe des erfindungsgemäßen Verfahrens erhaltenen Organo(poly)siloxan wird überschüssiger acetylenischer Alkohol (1) destillativ entfernt.

Als Maleinsäureanhydrid bzw. substituiertes Maleinsäureanhydrid wird in der 2. Stufe des erfindungsgemäßen Verfahrens vorzugsweise solches der Formel

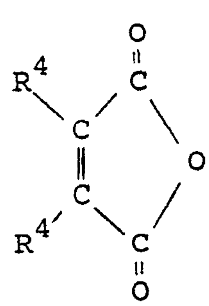

wobei $R^4$ die oben dafür angegebene Bedeutung hat, eingesetzt. Bevorzugt wird in der 2. Stufe des erfindungsgemäßen Verfahrens Maleinsäureanhydrid eingesetzt.

In der 2. Stufe des erfindungsgemäßen Verfahrens wird Maleinsäureanhydrid oder substituiertes Maleinsäureanhydrid vorzugsweise in Mengen von 1,2 bis 2,0 Mol, bevorzugt 1,2 bis 1,5 Mol, je Mol acetylenischer Alkohol (1) eingesetzt.

Entsprechend folgendem Reaktionsschema wird in der 2. Stufe des erfindungsgemäßen Verfahrens durch die Zugabe von Maleinsäureanhydrid oder substituiertem Maleinsäureanhydrid und gegebenenfalls einem sauren Katalysator von den Alkenolgruppen des in der 1. Stufe erhaltenen Organo(poly)siloxans intramolekular Wasser abgespalten und Maleinsäureanhydrid oder substituiertes Maleinsäureanhydrid gemäß einer Diels-Alder-Reaktion addiert:

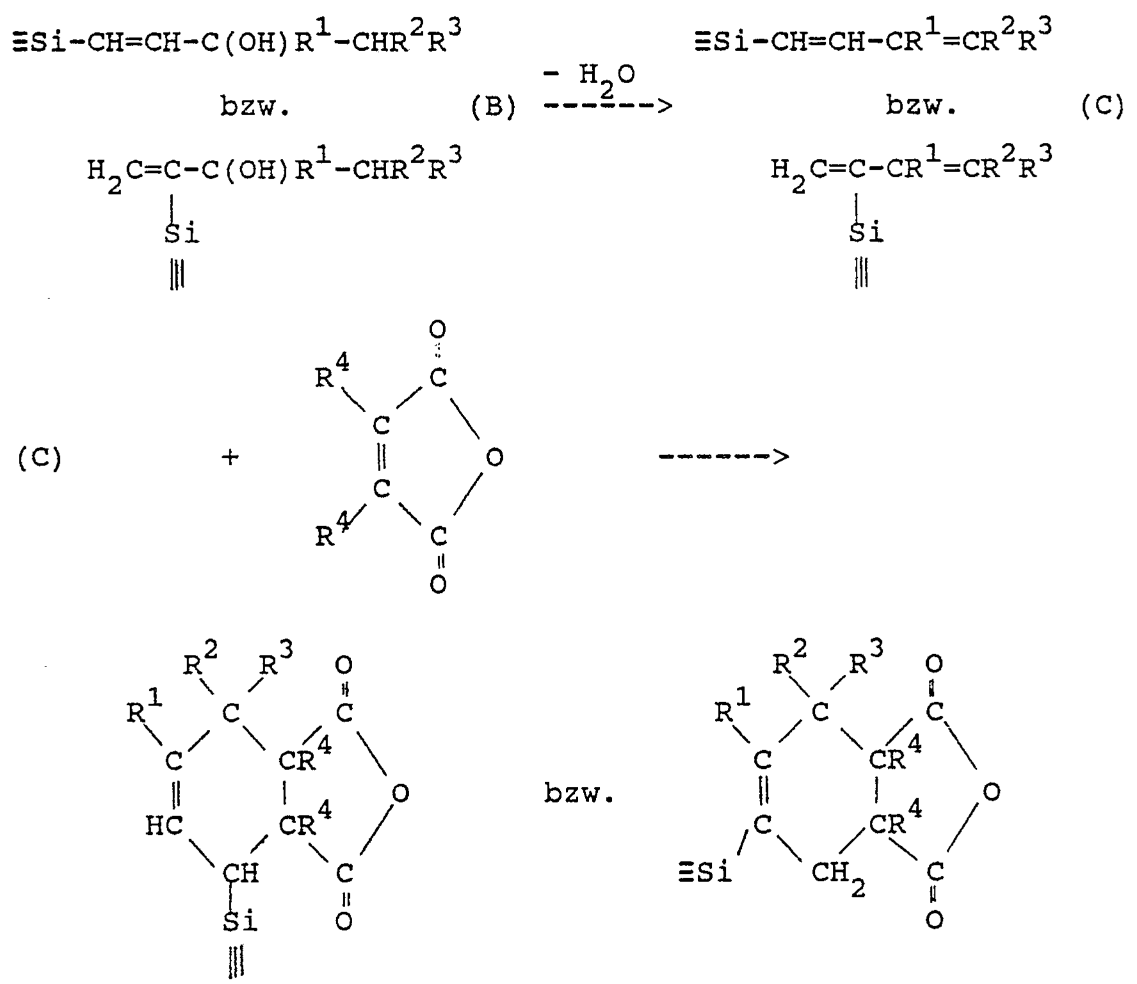


Beispiele für saure Katalysatoren, die gegebenenfalls in der 2. Stufe des erfindungsgemäßen Verfahrens zugegeben werden, sind Perchlorsäure, Schwefelsäure, Phosphorsäure, Hexafluor phosphorsäure, Trichloressigsäure, Fumarsäure, Trifluormethansulfonsäure, p-Toluolsulfonsäure, stark saure Ionenaustauscher und Tonerden. Saure Katalysatoren werden vorzugsweise in Mengen von 5 bis 1000 Gew.-ppm, bezogen auf das Gewicht von in der 1. Stufe des erfindungsgemäßen Verfahrens erhaltenem Alkenolgruppen aufweisendem Organo(poly)siloxan (B), zugegeben.

Die intramolekulare Wasserabspaltung und die Diels-Alder-Reaktion in der 2. Stufe des erfindungsgemäßen Verfahrens werden vorzugsweise bei 80 °C bis 150 °C, bevorzugt 100 °C bis 130 °C, und beim Druck der umgebenden Atmosphäre, also etwa bei 1020 hPa (abs.), durchgeführt. Falls erwünscht können aber auch höhere oder niedrigere Drücke angewendet werden.

In der 2. Stufe des erfindungsgemäßen Verfahrens werden vorzugsweise inerte, mit Wasser nichtmischbare Lösungsmittel verwendet. Beispiele für inerte, mit Wasser nichtmischbare Lösungsmittel sind Xylolisomerengemische, Toluol und Cyclohexan. Inertes, mit Wasser nichtmischbares Lösungsmittel wird vorzugsweise in Mengen von 10 bis 40 Gew.-%, bezogen auf das Gewicht von in der 1. Stufe des erfindungsgemäßen Verfahrens erhaltenem Alkenolgruppen aufweisendem Organo(poly)siloxan (B), verwendet. Das organische Lösungsmittel dient nicht nur als homogenisierendes Medium, sondern dient auch dazu, das Austragen von in der 2. Stufe des erfindungsgemäßen Verfahrens gebildetem Reaktionswasser zu erleichtern. Bevorzugt wird dabei das Reaktionswasser als Azeotrop abdestilliert, von dem kondensierten Azeotrop die Wasserphase abgetrennt und das inerte organische Lösungsmittel dem Reaktionsgemisch wieder zugeführt.

Von dem nach der Beendigung der 2. Stufe vorliegendem, Anhydridgruppen aufweisendem Organo(poly)siloxan wird inertes, organisches Lösungsmittel sowie überschüssige Maleinsäure bzw. substituierte Maleinsäure destillativ entfernt.

Als Organopolysiloxane (4), mit dem das nach Beendigung der 2. Stufe vorliegende, Anhydridgruppen aufweisende Organo(poly)siloxan gegebenenfalls äquilibriert wird, werden vorzugsweise solche ausgewählt aus der Gruppe bestehend aus linearen, endständige Triorganosiloxygruppen aufweisenden Organopolysiloxanen der Formel

$R_3SiO(SiR_2O)_rSiR_3$ ,

wobei R die oben dafür angegebene Bedeutung hat und r 0 oder eine ganze Zahl im Wert von 1 bis 1500 ist,

linearen, endständige Hydroxylgruppen aufweisenden Organopolysiloxanen der Formel

$HO(SiR_2O)_sH$ ,

wobei R die oben dafür angegebene Bedeutung hat und s eine ganze Zahl im Wert von 1 bis 1500 ist,

cyclischen Organopolysiloxanen der Formel

$(R_2SiO)_t$ ,

wobei R die oben dafür angegebene Bedeutung hat und t eine ganze Zahl von 3 bis 12 ist,

und Mischpolymerisaten aus Einheiten der Formel

$R_2SiO$ und $RSiO_{3/2}$ ,

wobei R die oben dafür angegebene Bedeutung hat,

eingesetzt.

Die Mengenverhältnisse der in der gegebenenfalls durchgeführten 3. Stufe des erfindungsgemäßen Verfahrens eingesetzten Organopolysiloxane werden lediglich durch den gewunschten Anteil der anhydridfunktionellen Gruppen in dem in der gegebenenfalls durchgeführten 3. Stufe des erfindungsgemäßen Verfahrens erzeugten Organo(poly)siloxane und durch die gewünschte mittlere Kettenlänge bestimmt.

Bei dem gegebenenfalls in der 3. Stufe des erfindungsgemäßen Verfahrens durchgeführten Äquilibrieren werden vorzugsweise saure Katalysatoren, welche die Äquilibrierung fördern, eingesetzt. Beispiele für solche Katalysatoren sind Schwefelsäure, Phosphorsäure, Trifluormethansulfonsäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (= Teile je Million), insbesondere 50 bis 200 Gew.-ppm, jeweils bezogen auf das Gesamtgewicht der eingesetzten Organosiliciumverbindungen, verwendet.

Die gegebenenfalls in der 3. Stufe des erfindungsgemäßen Verfahrens durchgeführte Äquilibrierung wird vorzugsweise bei 80 °C bis 130 °C und beim Druck der umgebenden Athmosphäre, also etwa bei 1020 hPa (abs.) durchgeführt. Falls erwünscht, können aber auch höhere oder niedrigere Drücke angewendet werden. Das Äquilibrieren wird vorzugsweise in 5 bis 20 Gew.-%, bezogen auf das Gesamtgewicht der jeweils eingesetzten Organosiliciumverbindungen, in mit Wasser nichtmischbarem Lösungsmittel, wie Toluol, durchgeführt. Vor dem Aufarbeiten des bei dem Äquilibrieren erhaltenen Gemisches kann der Katalysator unwirksam gemacht werden.

Die verschiedenen Stufen des erfindungsgemäßen Verfahrens können in ein und demselben Reaktionsgefäß hintereinander oder in von einander getrennten Reaktionsgefäßen durchgeführt werden. Vorzugsweise wird es in ein und demselben Reaktionsgefäß hintereinander durchgeführt. Das erfindungsgemäße Verfahren kann absatzweise, halbkontinuierlich oder vollkontinuierlich durchgeführt werden.

Die erfindungsgemäßen anhydridfunktionellen Organo(poly)siloxane der Formel (I), wobei mindestens zwei Reste A je Molekül enthalten sind, können zur Herstellung von Organopolysiloxan-Polyimid-Copolymere verwendet werden. Dabei werden organische Diamine, vorzugsweise solche der Formel

$NH_2R^5NH_2$ ,

wobei $R^5$ einen zweiwertigen Kohlenwasserstoffrest mit 2 bis 15 Kohlenstoffatomen je Rest, oder einen zweiwertigen Rest der Formel

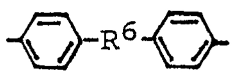

wobei $R^6$ 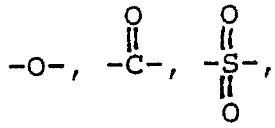

-S- oder $C_xH_{2x}$ (x ist eine ganze Zahl Von 1 bis 5) ist, bedeutet, mit in den endständigen Einheiten Anhydridgruppen A aufweisende Organo(poly)siloxane, vorzugsweise solche der Formel (II), und gegebenenfalls anderen organischen Bisanhydriden, wie Benzophenontetracarbonsäureanhydrid, Benzoltetracarbonsäureanhydrid und Diphenylethertetracarbonsäureanhydrid umgesetzt.

Beispiele für Kohlenwasserstoffreste $R^5$ sind Alkylenreste, Cycloalkylenreste und zweiwertige aromatische Kohlenwasserstoffreste.

Beispiele für organische Diamine sind
4,4′-Diaminodiphenylmethan,
4,4′-Diaminodiphenylsulfon,
4,4′-Diaminodiphenylether,
p-Xylilendiamin,
2,4-Diaminotoluol und
1,4-Diaminocyclohexan.

Die erfindungsgemäßen anhydridfunktionellen Organo(poly)siloxane der Formel (I), wobei mindestens zwei Reste A je Molekül enthalten sind, können auch als Härtungsmittel für Epoxyharze verwendet werden. Es werden dabei hitzehärtbare Epoxyharzmassen geschaffen, die ein Epoxyharz und ein in den endständigen Einheiten Anhydridgruppen A aufweisendes Organo(poly)siloxan, vorzugsweise solches der Formel (II), enthalten. Der Begriff Epoxyharz schließt monomere, dimere, oligomere und polymere Epoxymaterialien ein, die ein oder mehrere funktionelle Epoxygruppen enthalten. So können beispielsweise solche Harze, die bei der Umsetzung von Bis-(4-hydroxyphenyl)-propan und Epichlorhydrin oder durch Umsetzung niedermolekularer Phenol/Formaldehydharze (Novolak-Harze) mit Epichlorhydrin erhalten werden, verwendet werden. Vorzugsweise sind in den hitzehärtbaren Epoxyharzmassen 0,5 bis 1,0 Mole der Anhydridgruppen A pro Mol des Oxiransauerstoffes des Epoxyharzes enthalten.

Weiterhin können die erfindungsgemäßen anhydridfunktionellen Organo(poly)siloxane zur Behandlung von Textilien und Leder verwendet werden.

Beispiel 1:

Zu einer Mischung aus 92,5 g (1,1 Mol) 2-Methyl-3-butin-2-ol und in 1-Octen gelöstem Platintetrachlorid, das 1,5 mg Platin, berechnet als Element, enthält, werden bei 100 °C 294 g eines Dimethylhydrogensiloxygruppen als endständige Einheiten aufweisenden Dimethylpolysiloxans, das 0,34 Gew.-% Si-gebundenen Wasserstoff enthält, zugetropft. Nach ca. 4 Stunden Reaktionszeit bei 100 °C sind 97 % des Si-gebundenen Wasserstoffs umgesetzt. Das überschüssige 2-Methyl-3-butin-2-ol wird bei 100 °C und 5 hPa (abs.) abdestilliert. Das [1]-H-NMR-Spektrum des Additionsproduktes zeigt für die Si-gebundenen Alkenolgruppen der Formel

$-CH=CH-C(OH)(CH_3)-CH_3$ und $CH_2=C-C(OH)(CH_3)-CH_3$

J(-C H =C H -) = 19 Hz
J(C H 2 =C-) = 1,5 Hz
ein Isomerenverhältnis von 65 : 35.

196 g (2,0 Mol) Maleinsäureanhydrid werden dann zusammen mit 400 ml Xylol zudosiert und unter Rückflußbedingungen wird 4 Stunden lang das bei der Umsetzung gebildete Reaktionswasser ausgekreist.

Das Xylol und überschüssiges Maleinsäureanhydrid werden dann bei 100 °C und 5 hPa (abs.) destillativ entfernt. Es werden 440 g eines Dimethylpolysiloxans mit endständigen Si-gebundenen Anhydridgruppen der Formel

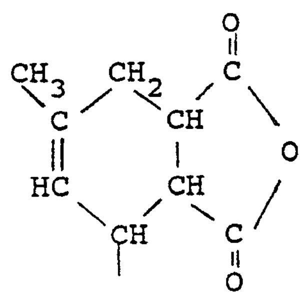

und

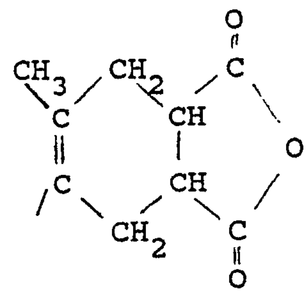

erhalten, wobei es sich bei den Anhydridgruppen analog den obigen Alkenolgruppen um ein Isomerengemisch handelt. Das endständige Anhydridgruppen aufweisende Dimethylpolysiloxan besitzt eine Viskosität von 950 $mn^2 \cdot s^{-1}$ bei 25 °C und ein Anhydridequivalent von 2,05 mMol/g und das IR-Spektrum weist bei 1777 $cm^{-1}$ und 1846 $cm^{-1}$ die Valenzschwingungen für die Carbonylgruppen und bei 1610 $cm^{-1}$ die Valenzschwingung für die Doppelbindung in den Anhydridgruppen auf.

Beispiel 2:

Die Arbeitsweise von Beispiel 1 wird wiederholt mit der Abänderung, daß als Dimethylhydrogensiloxygruppen als endständige Einheiten aufweisendes Dimethylpolysiloxan solches, das 0,29 Gew.-% Si-gebundenen Wasserstoff anstelle 0,34 Gew.-% Si-gebundenen Wasserstoff enthält, eingesetzt wird. 40 g des so erhaltenen Dimethylpolysiloxans mit endständigen Anhydridgruppen werden mit einer Lösung von 144 g Si-gebundene Hydroxylgruppen als endständige Einheiten aufweisenden Dimethylpolysiloxan mit einer Viskosität von 80 000 $mm^2 \cdot s^{-1}$ bei 25 °C in 140 g Toluol in Gegenwart von 100 Gew.-ppm Phosphornitridchlorid, bezogen auf das Gesamtgewicht der Reaktionsmischung, bei 110 °C äquilibriert. Zum Unwirksammachen des Katalysators wird die Reaktionsmischung 15 Minuten lang mit säureaktivierter Tonerde gerührt. Anschließend wird die Reaktionsmischung filtriert. Das ölige Produkt hat eine Viskosität von 320 $m^2 \cdot s^{-1}$ bei 25 °C und zeigt im IR-Spektrum bei 1779 $cm^{-1}$ und 1847 $cm^{-1}$ die beiden Valenzschwingungen für die Carbonylgruppen in den Anhydridgruppen. Das Anhydridequivalentgewicht von 0,32 mMol/g entspricht einem Dimethylpolysiloxan mit je einer endständigen Anhydridgruppe, das eine Kettenlänge von 80 Si-Atomen und ein durchschnittliches Molekulargewicht von 6250 g/Mol aufweist.

Beispiel 3:

Eine Mischung aus 92,5 g (1,1 Mol) 2-Methyl-3-butin-2-ol und in 1-Octen gelöstem Platintetrachlorid, das 6 mg Platin, berechnet als Element, enthält, wird unter Rückfluß erhitzt. Innerhalb von 2 Stunden werden 182 g eines Trimethylsiloxygruppen als endständige Einheiten aufweisenden Diorganopolysiloxans aus Dimethylsiloxan- und Methylhydrogensiloxaneinheiten, das 0,55 Gew.-% Si-gebundenen Wasserstoff enthält und eine Viskosität von 11,2 $mm^2 \cdot s^{-1}$ bei 25 °C aufweist, zugetropft. Nach ca. 5 Stunden Reaktionszeit bei 105 °C sind 98 % der Si-gebundenen Wasserstoffatome umgesetzt. Das überschüssige 2-Methyl-3-butin-2-ol wird dann bei 100 °C und 5 hPa (abs.) abdestilliert. Das Hydrosilylierungsprodukt weist eine Viskosität von 2080 $mm^2 \cdot s^{-1}$ bei 25 °C auf. Nach Zugabe von 147 g (1,5 Mol) Maleinsäureanhydrid, 200 g Toluol und 2 Tropfen Perchlorsäure wird das bei der Reaktion gebildete Reaktionswasser ausgekreist. Nachdem das Toluol und das überschüssige Maleinsäureanhydrid bei 105 °C und 5 hPa (abs.) destillativ entfernt ist, wird ein hochviskoses Öl, das sich klar in Toluol löst, erhalten. Das entlang der Siloxankette Anhydridgruppen aufweisende Diorgano-polysiloxan weist ein Anhydridequivalentgewicht von 2,1 mMol/g auf und das IR-Spektrum zeigt die beiden Valenzschwingungen der Carbonylgruppen bei 1777 $cm^{-1}$ und 1845 $cm^{-1}$.

Beispiel 4:

Zu einer Mischung aus 108 g (1,1 Mol) 3-Methyl-4-pentin-3-ol und in 1-Octen gelöstem Platintetrachlorid, das 3 mg Platin, berechnet als Element, enthält, werden bei 110 °C 455 g eines in den endständigen Einheiten Si-gebundenen Wasserstoff aufweisenden Dimethylpolysiloxans der durchschnittlichen Zusammensetzung $H[Si(CH_3)_2O]_{11,5}Si(CH_3)_2H$ in 3 Stunden zugetropft. Nach weiteren 2 Stunden Reaktionszeit bei 115 °C sind 98 % des Si-gebundenen Wasserstoffs umgesetzt. Überschüssiges 3-Methyl-4-pentin-3-ol wird bei 100 °C und 5 hPa (abs.) destillativ entfernt. 147 g (1,5 Mol) Maleinsäureanhydrid werden dann zusammen mit 200 g Toluol und der katalytischen Menge von 4 Tropfen Perchlorsäure zugegeben und das bei der Umsetzung gebildete Wasser wird vollständig azeotrop ausdestilliert. Toluol und überschüssiges Maleinsäureanhydrid werden dann bei 100 °C und 5 hPa (abs.) destillativ entfernt. Es werden 552 g eines Dimethylpolysiloxans mit je einer Anhydridgruppe in den enständigen Einheiten erhalten, das eine Viskosität von 235 $mm^2 \cdot s^{-1}$ bei 25 °C besitzt, ein Anhydridequivalent von 1,24 mMol/g aufweist und dessen IR-Spektrum bei 1775 $cm^{-1}$ und 1846 $cm^{-1}$ die Valenzschwingungen für die Carbonylgruppen der Anhydridgruppen und im Bereich Von 1600 bis 1650 $cm^{-1}$ mehrere Valenzschwingungen für die C=C-Doppelbindung der Anhydridgruppen aufweist.

Beispiel 5:

Ein Dimethylpolysiloxan-Polyimid-Copolymer wird hergestellt, indem bei 25 °C 1,6 g (1 mMol) des Dimethylpolysiloxans mit endständigen Anhydridgruppen, dessen Herstellung in Beispiel 4 beschrieben ist, 2,9 g (9 mMol) Benzophenontetracarbonsäureanhydrid gelöst in 10 ml Dimethylformamid und 2,0 g (10 mMol) 4,4′-Diaminodiphenylmethan gelöst in 10 ml Dimethylformamid 2 Stunden lang miteinander verrührt werden. Die Lösung wird anschließend bei 80 °C 1 Stunde lang getempert und dann 2 Stunden lang bei 150 °C im Umluftofen ausgehärtet. Das Polyimid enthält Ca. 15 Gew.-% Dimethylsiloxaneinheiten. Die thermogravimetrische Analyse zeigt unter Stickstoff einen Verlust von 10 Gew.-% bei 490 °C und einer Aufheizrate von 10 °C pro Minute.

Beispiel 6:

Die Arbeitsweise von Beispiel 4 wird wiederholt mit der Abänderung, daß 136,4 g (1,1 Mol) 1-Ethinylcyclohexan-1-ol anstelle von 108 g (1,1 Mol) 3-Methyl-4-pentin-3-ol eingesetzt werden. Es werden 98,5 % des eingesetzten Si-gebundenen Wasserstoffs umgesetzt. Nach der Umsetzung mit Maleinsäureanhydrid werden 588 g eines Öls mit einer Viskosität von 600 $mm^2 \cdot s^{-1}$ bei 25 °C erhalten. Das so gewonnene Dimethylpolysiloxan enthält endständige Anhydridgruppen, weist ein Anhydridequivalent von 1,21 mMol/g auf und das IR-Spektrum zeigt bei 1779 $cm^{-1}$ und 1858 $cm^{-1}$ die Valenzschwingungen für die Carbonylgruppen und bei 1600 $cm^{-1}$ die Valenzschwingung für die Doppelbindung in den Anhydridgruppen.

Beispiel 7:

Die Arbeitsweise von Beispiel 4 wird wiederholt mit der Abänderung, daß 1,1 Mol 2-Methyl-3-butin-2-ol anstelle von 1,1 Mol 3-Methyl-4-pentin-3-ol eingesetzt werden. Das so gewonnene Dimethylpolysiloxan mit endständigen Anhydridgruppen ist ein Öl mit einer Viskosität von 275 $mm^2 \cdot s^{-1}$ bei 25 °C und weist ein Anhydridequivalent von 1,28 mMol/g auf.

Beispiel 8:

13,3 g des Dimethylpolysiloxans mit endständigen Anhydridgruppen, dessen Herstellung in Beispiel 4 beschrieben ist, werden mit 2,6 g einer Epoxyverbindung der Formel

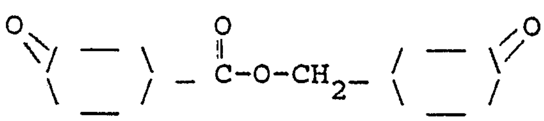

vermischt und 20 Minuten lang bei 160 °C homogenisiert. Das Produkt erfährt bei 25 °C innerhalb einer Woche eine Viskositätssteigerung von nur ca. 20 % beginnend bei 520 $mm^2 \cdot s^{-1}$. Ein Zusatz von 50 mg Borfluorid-Ätherat führt bei 25 °C zum baldigen Gelieren. Die Masse härtet bei 150 °C zu einem festen Körper aus. Eine 3 mm starke, gegossene Folie hat die Shore-A-Härte 75.

Beispiel 9:

a) 120 g eines Mischpolymerisats aus 40 Mol% Trimethylsiloxan-, 34 Mol% Phenylmethylsiloxan- und 26 Mol% Phenylsiloxaneinheiten werden mit 120 g eines Trimethylsiloxygruppen als endständige Einheiten aufweisenden Methylhydrogenpolysiloxans in Gegenwart von 200 Gew.-ppm Phosphornitridchlorid bei 120 °C equilibriert. Nach der Desaktivierung des Phosphornitridchlorids durch Zugabe von 2,5 g Magnesiumoxid und Filtration werden 230 g eines klaren, farblosen Copolymerisats mit einer Viskosität von 18 $mm^2 \cdot s^{-1}$ bei 25 °C, das 0,86 Gew.-% Si-gebundenen Wasserstoff enthält, gewonnen.

b) Zu einer Mischung aus 185 g 2-Methyl-3-butin-2-ol und 100 mg Platin, berechnet als Element, in Form von in 1-Octen gelöstem Platintetrachlorid werden bei 102 °C 230 g (entsprechend 2,0 g Si-gebundenen Wasserstoffs) des Copolymerisats mit Si-gebundenem Wasserstoff, dessen Herstellung oben unter a) beschrieben wurde, zugetropft. Nach 20 Stunden Reaktionszeit bei ca. 115 °C sind ca. 99% des Si-gebundenen Wasserstoffs des Copolymerisats umgesetzt. Die flüchtigen Bestandteile werden bei 100 °C und 10 hPa destillativ entfernt. 600 g Toluol, 300 g Maleinsäureanhydrid und 20 mg konzentrierte Schwefelsäure werden dann zugegeben und bei 115 °C unter Toluolrückfluß wird ca. 6 Stunden lang das bei der Umsetzung gebildete Reaktionswasser ausgekreist. Nach Zugabe von 10 g Tonerde wird die Lösung filtriert und die flüchtigen Bestandteile werden bei 100 °C und 10 hPa destillativ entfernt. Es werden 470 g eines Siliconharzes mit Si-gebundenen Anhydridgruppen der Formel

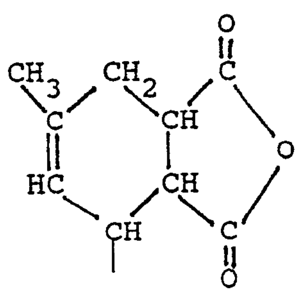

und

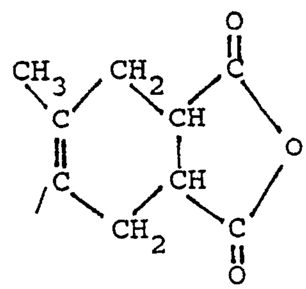

erhalten, das einen Schmelzbereich von 50-70 °C und eine Säurezahl von 210 hat. Das IR-Spektrum weist bei 1776 $cm^{-1}$ und 1847 $cm^{-1}$ die Valenzschwingungen für die Carbonylgruppen auf.

Beispiel 10:

In 370 g 2-Methyl-3-butin-2-ol werden 36 mg $H_2PtCl_6 . 3H_2O$ in Form einer 1%igen Lösung in Isopropanol gelöst, und die Lösung wird unter Stickstoffatmosphäre auf Rückfluß erhitzt. Zu der Lösung werden dann innerhalb von 4 Stunden bei leicht steigender Temperatur (maximal 115 °C) 268 g 1,1,3,3-Tetramethyldisiloxan zudosiert. Nachdem 99% des Si-gebundenen Wasserstoffs des 1,1,3,3-Tetramethyldisiloxans umgesetzt sind, werden die flüchtigen Bestandteile bei 80 °C und 15 hPa (abs.) destillativ entfernt. 600 g Maleinsäureanhydrid, 900 g Toluol und 30 mg konzentrierte Schwefelsäure werden dann zugegeben, und unter Toluolrückfluß werden im Lauf von 6 Stunden ca. 70 ml Wasser azeotrop ausgekreist. Nach dem Abkühlen des Reaktionsgemisches werden 20 g Tonerde zugegeben und das Gemisch wird filtriert. Anschließend wird das Toluol und überschüssiges Maleinsäureanhydrid destillativ entfernt. Es werden 900 g (97 % d.Th.) eines Disiloxans der Formel

$A'(CH_3)_2SiOSi(CH_3)_2A'$

mit Anhydridgruppen A', die strukturgleich mit den Anhydridgruppen aus Beispiel 1 sind, erhalten. Das IR-Spektrum weist bei 1775 $cm^{-1}$ und 1844 $cm^{-1}$ die Valenzschwingungen für die Carbonylgruppen auf.

**Ansprüche**

1. Anhydridfunktionelle Organo(poly)siloxane aus durchschnittlichen Einheiten der allgemeinen Formel

$$A_aR_bSiO_{\frac{4-(a+b)}{2}} \quad (I),$$

wobei R gleich oder verschieden ist, einen einwertigen, gegebenenfalls halogenierten Kohlenwasserstoffrest mit 1 bis 18 Kohlenstoffatom(en) je Rest bedeutet,
A einen Rest der Formel

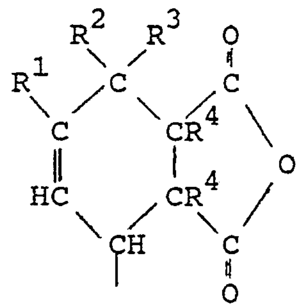

und/oder

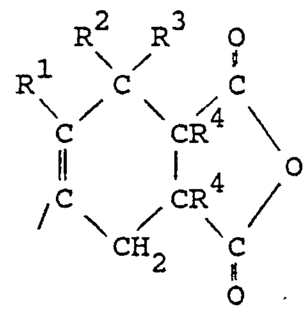

bedeutet, wobei $R^1$ ein Wasserstoffatom oder einen einwertigen, gegebenenfalls halogenierten Kohlenwasserstoffrest mit 1 bis 12 Kohlenstoffatom(en) je Rest und
$R^2$ ein Wasserstoffatom oder einen einwertigen Kohlenwasserstoffrest mit 1 bis 12 Kohlenstoffatom(en) je Rest bedeutet oder die beiden Reste $R^1$ und $R^2$ zusammen einen zweiwertigen Kohlenwasserstoffrest mit 3 bis 5 Kohlenstoffatomen je Rest darstellen,
$R^3$ ein Wasserstoffatom oder einen einwertigen Kohlenwasserstoffrest mit 1 bis 4 Kohlenstoffatom(en) je Rest bedeutet, mit der Maßgabe, daß $R^3$ ein wasserstoffatom ist, wenn die beiden Reste $R^1$ und $R^2$ zusammen einen zweiwertigen Kohlenwasserstoffrest mit 3 bis 5 Kohlenstoffatomen je Rest darstellen, und
$R^4$ gleich oder verschieden ist, ein Wasserstoffatom, ein Halogenatom oder einen Cyanrest bedeutet,
a 0 oder 1, durchschnittlich 0,003 bis 1,0
b 0, 1, 2 oder 3, durchschnittlich 0,05 bis 2,5,
und die Summe a+b durchschnittlich nicht größer als 3 ist,
mit der Maßgabe, daß mindestens ein Rest A je Molekül enthalten ist.
2. Anhydridfunktionelle Organo(poly)siloxane nach Anspruch 1, dadurch gekennzeichnet, daß $R^1$ ein Methylrest und $R^2$, $R^3$ und $R^4$ jeweils ein Wasserstoffatom ist.
3. Anhydridfunktionelle Organo(poly)siloxane nach Anspruch 1 oder 2, dadurch gekennzeichnet, daß es solche der allgemeinen Formel
$A_dR_{3-d}SiO(SiR_2O)_n(SiRAO)_mSiR_{3-d}A_d$ (II)
sind, wobei R gleich oder verschieden ist, einen einwertigen, gegebenenfalls halogenierten Kohlenwasserstoffrest mit 1 bis 18 Kohlenstoffatom(en) je Rest bedeutet,
A einen Rest der Formel

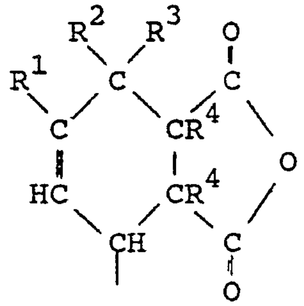

und/oder

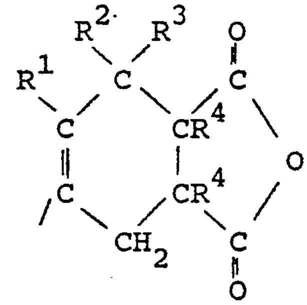

bedeutet, wobei $R^1$ ein Wasserstoffatom oder einen einwertigen, gegebenenfalls halogenierten Kohlenwasserstoffrest mit 1 bis 12 Kohlenstoffatom(en) je Rest und
$R^2$ ein Wasserstoffatom oder einen einwertigen Kohlenwasserstoffrest mit 1 bis 12 Kohlenstoffatom(en) je Rest bedeutet oder die beiden Reste $R^1$ und $R^2$ zusammen einen zweiwertigen Kohlenwasserstoffrest mit 3 bis 5 Kohlenstoffatomen je Rest darstellen,
$R^3$ ein Wasserstoffatom oder einen einwertigen Kohlenwasserstoffrest mit 1 bis 4 Kohlenstoffatom(en) je Rest bedeutet, mit der Maßgabe, daß $R^3$ ein Wasserstoffatom ist, wenn die beiden Reste $R^1$ und $R^2$ zusammen einen zweiwertigen Kohlenwasserstoffrest mit 3 bis 5 Kohlenstoffatomen je Rest darstellen,
$R^4$ gleich oder verschieden ist, ein Wasserstoffatom, ein Halogenatom oder einen Cyanrest bedeutet,
d 0 oder 1,
n 0 oder eine ganze Zahl von 1 bis 1500 und,
m 0 oder eine ganze Zahl von 1 bis 200 ist,
mit der Maßgabe, daß mindestens ein Rest A je Molekül enthalten ist und das Verhältnis n:m nicht größer als 200 ist.

4. Verfahren zur Herstellung von anhydridfunktionellen Organo(poly)siloxanen nach einem der Ansprüche 1 bis 3, dadurch gekennzeichnet, daß zunächst
in einer 1. Stufe
sekundärer oder tertiärer acetylenischer Alkohol (1) an ein Organo(poly)siloxan (2) mit mindestens einem Si-gebundenen Wasserstoffatom in Gegenwart von die Anlagerung von Si-gebundenem Wasserstoff an aliphatische Mehrfachbindung förderndem Katalysator (3) angelagert wird, und dann
in einer 2. Stufe
die Alkenolgruppen des in der 1. Stufe erhaltenen Organo(poly)siloxans mit Maleinsäureanhydrid oder substituiertem Maleinsäureanhydrid gegebenenfalls in Gegenwart von saurem Katalysator umgesetzt werden, wobei Wasser intramolekular aus den Alkenolgruppen abgespalten und Maleinsäureanhydrid oder substituiertes Maleinsäureanhydrid dann entsprechend einer Diels-Alder-Reaktion daran addiert wird, und gegebenenfalls
in einer 3. Stufe
das nach Beendigung der 2. Stufe vorliegende, Anhydridgruppen aufweisende Organo(poly)siloxan mit Organopolysiloxan (4) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten äquilibriert wird.

5. Verfahren nach Anspruch 4, dadurch gekennzeichnet, daß als sekundärer oder tertiärer acetylenischer Alkohol (1) solcher der allgemeinen Formel
$HC{\equiv}C\text{-}C(OH)R^1\text{-}CHR^2R^3$ ,
wobei $R^1$ ein Wasserstoffatom oder einen einwertigen, gegebenenfalls halogenierten Kohlenwasserstoffrest mit 1 bis 12 Kohlenstoffatom(en) je Rest und $R^2$ ein Wasserstoffatom oder einen einwertigen Kohlenwasserstoffrest mit 1 bis 12 Kohlenstoffatom(en) je Rest bedeutet oder die beiden Reste $R^1$ und $R^2$ zusammen einen zweiwertigen Kohlenwasserstoffrest mit 3 bis 5 Kohlenstoffatomen je Rest darstellen,
$R^3$ ein Wasserstoffatom oder einen einwertigen Kohlenwasserstoffrest mit 1 bis 4 Kohlenstoffatom(en) je Rest bedeutet, mit der Maßgabe, daß $R^3$ ein Wasserstoffatom ist, wenn die beiden Reste $R^1$ und $R^2$ zusammen einen zweiwertigen Kohlenwasserstoffrest mit 3 bis 5 Kohlenstoffatomen je Rest darstellen,
verwendet wird.

6. Verfahren nach Anspruch 5, dadurch gekennzeichnet, daß als sekundärer oder tertiärer acetylenischer Alkohol (1) 2-Methyl-3-butin-2-ol verwendet wird.

7. Verwendung der anhydridfunktionellen Organopolysiloxane nach einem der Ansprüche 1 bis 3 zur Herstellung von Organopolysiloxan-Polyimid-Copolymeren.

8. Verwendung der anhydridfunktionellen Organopolysiloxane nach einem der Ansprüche 1 bis 3 als Härtungsmittel für Epoxyharz.

Patentansprüche für folgenden Vertragsstaat: ES

1. Verfahren zur Herstellung von anhydridfunktionellen Organo(poly)siloxanen aus durchschnittlichen Einheiten der allgemeinen Formel

$$A_aR_bSiO_{\frac{4-(a+b)}{2}} \quad (I) ,$$

wobei R gleich oder verschieden ist, einen einwertigen, gegebenenfalls halogenierten Kohlenwasserstoffrest mit 1 bis 18 Kohlenstoffatom(en) je Rest bedeutet,
A einen Rest der Formel

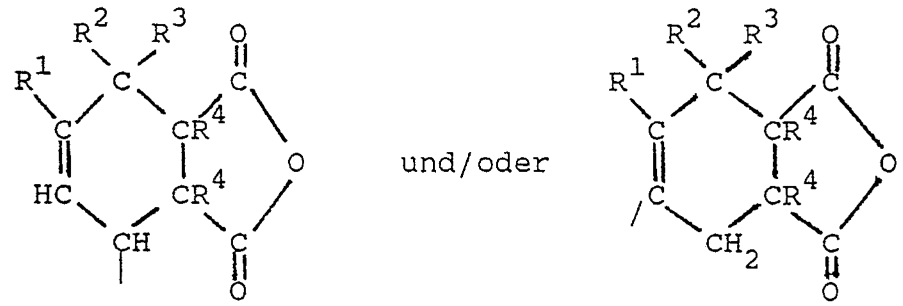

und/oder

bedeutet, wobei $R^1$ ein Wasserstoffatom oder einen einwertigen, gegebenenfalls halogenierten Kohlenwasserstoffrest mit 1 bis 12 Kohlenstoffatom(en) je Rest und
$R^2$ ein Wasserstoffatom oder einen einwertigen Kohlenwasserstoffrest mit 1 bis 12 Kohlenstoffatom(en) je Rest bedeutet oder die beiden Reste $R^1$ und $R^2$ zusammen einen zweiwertigen Kohlenwasserstoffrest mit 3 bis 5 Kohlenstoffatomen je Rest darstellen,
$R^3$ ein Wasserstoffatom oder einen einwertigen Kohlenwasserstoffrest mit 1 bis 4 Kohlenstoffatom(en) je Rest bedeutet, mit der Maßgabe, daß $R^3$ ein Wasserstoffatom ist, wenn die beiden Reste $R^1$ und $R^2$ zusammen einen zweiwertigen Kohlenwasserstoffrest mit 3 bis 5 Kohlenstoffatomen je Rest darstellen, und
$R^4$ gleich oder verschieden ist, ein Wasserstoffatom, ein Halogenatom oder einen Cyanrest bedeutet,
a 0 oder 1, durchschnittlich 0,003 bis 1,0
b 0, 1, 2 oder 3, durchschnittlich 0,05 bis 2,5,
und die Summe a + b durchschnittlich nicht größer als 3 ist,
mit der Maßgabe, daß mindestens ein Rest A je Molekül enthalten ist, dadurch gekennzeichnet, daß zunächst

in einer 1. Stufe
sekundärer oder tertiärer acetylenischer Alkohol (1) an ein Organo(poly)siloxan (2) mit mindestens einem Si-gebundenen Wasserstoffatom in Gegenwart von die Anlagerung von Si-gebundenem Wasserstoff an aliphatische Mehrfachbindung förderndem Katalysator (3) angelagert wird, und dann
in einer 2. Stufe
die Alkenolgruppen des in der 1. Stufe erhaltenen Organo(poly)siloxans mit Maleinsäureanhydrid oder substituiertem Maleinsäureanhydrid gegebenenfalls in Gegenwart von saurem Katalysator umgesetzt werden, wobei Wasser intramolekular aus den Alkenolgruppen abgespalten und Maleinsäureanhydrid oder substituiertes Maleinsäureanhydrid dann entsprechend einer Diels-Alder-Reaktion daran addiert wird, und gegebenenfalls
in einer 3. Stufe
das nach Beendigung der 2. Stufe vorliegende, Anhydridgruppen aufweisende Organo(poly)siloxan mit Organopolysiloxan (4) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorgano siloxan- und Monoorganosiloxaneinheiten äquilibriert wird.

2. Verfahren zur Herstellung von anhydridfunktionellen Organo(poly)siloxanen aus durchschnittlichen Einheiten der allgemeinen Formel

$$A_aR_bSiO_{\frac{4-(a+b)}{2}} \quad (I),$$

wobei R gleich oder verschieden ist, einen einwertigen, gegebenenfalls halogenierten Kohlenwasserstoffrest mit 1 bis 18 Kohlenstoffatom(en) je Rest bedeutet,
A einen Rest der Formel

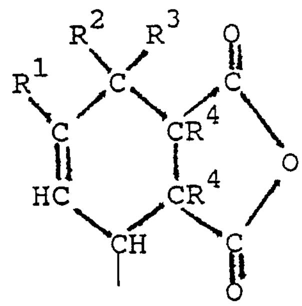

und/oder

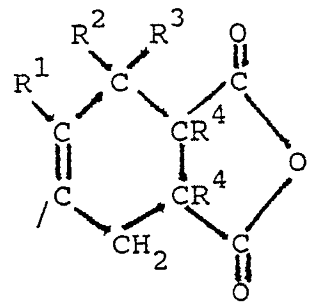

bedeutet, wobei $R^1$ ein Methylrest und $R^2$, $R^3$ und $R^4$ jeweils ein Wasserstoffatom ist,
a 0 oder 1, durchschnittlich 0,003 bis 1,0
b 0, 1, 2 oder 3, durchschnittlich 0,05 bis 2,5,
und die Summe a + b durchschnittlich nicht größer als 3 ist,
mit der Maßgabe, daß mindestens ein Rest A je Molekül enthalten ist, dadurch gekennzeichnet, daß zunächst

in einer 1. Stufe
sekundärer oder tertiärer acetylenischer Alkohol (1) an ein Organo(poly)siloxan (2) mit mindestens einem Si-gebundenen Wasserstoffatom in Gegenwart von die Anlagerung von Si-gebundenem Wasserstoff an aliphatische Mehrfachbindung förderndem Katalysator (3) angelagert wird, und dann

in einer 2. Stufe
die Alkenolgruppen des in der 1. Stufe erhaltenen Organo(poly)siloxans mit Maleinsäureanhydrid gegebenenfalls in Gegenwart von saurem Katalysator umgesetzt werden, wobei Wasser intramolekular aus den Alkenolgruppen abgespalten und Maleinsäureanhydrid dann entsprechend einer Diels-Alder-Reaktion daran addiert wird, und gegebenenfalls

in einer 3. Stufe
das nach Beendigung der 2. Stufe vorliegende, Anhydridgruppen aufweisende Organo(poly)siloxan mit Organopolysiloxan (4) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten äquilibriert wird.

3. Verfahren zur Herstellung von anhydridfunktionellen Organo(poly)siloxanen der allgemeinen Formel
$A_dR_{3-d}SiO(SiR_2O)_n(SiRAO)_mSiR_{3-d}A_d$ (II)
wobei R gleich oder verschieden ist, einen einwertigen, gegebenenfalls halogenierten Kohlenwasserstoffrest mit 1 bis 18 Kohlenstoffatom(en) je Rest bedeutet, A einen Rest der Formel

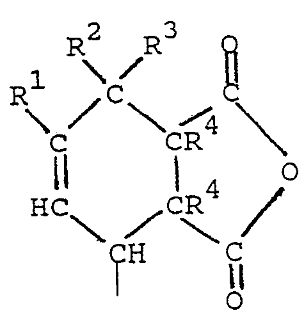

und/oder

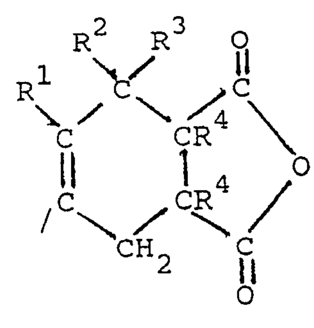

bedeutet, wobei $R^1$ ein Wasserstoffatom oder einen einwertigen, gegebenenfalls halogenierten Kohlenwasserstoffrest mit 1 bis 12 Kohlenstoffatom(en) je Rest und
$R^2$ ein Wasserstoffatom oder einen einwertigen Kohlenwasserstoffrest mit 1 bis 12 Kohlenstoffatom(en) je Rest bedeutet oder die beiden Reste $R^1$ und $R^2$ zusammen einen zweiwertigen Kohlenwasserstoffrest mit 3 bis 5 Kohlenstoffatomen je Rest darstellen,
$R^3$ ein Wasserstoffatom oder einen einwertigen Kohlenwasserstoffrest mit 1 bis 4 Kohlenstoffatom(en) je Rest bedeutet, mit der Maßgabe, daß $R^3$ ein Wasserstoffatom ist, wenn die beiden Reste $R^1$ und $R^2$ zusammen einen zweiwertigen Kohlenwasserstoffrest mit 3 bis 5 Kohlenstoffatomen je Rest darstellen,
$R^4$ gleich oder verschieden ist, ein Wasserstoffatom, ein Halogenatom oder einen Cyanrest bedeutet,

d 0 oder 1,
n 0 oder eine ganze Zahl von 1 bis 1500 und,
m 0 oder eine ganze Zahl von I bis 200 ist,
mit der Maßgabe, daß mindestens ein Rest A je Molekül enthalten ist und das Verhältnis n:m nicht größer als 200 ist, dadurch gekennzeichnet, daß zunächst

in einer 1. Stufe

sekundärer oder tertiärer acetylenischer Alkohol (1) an ein Organo(poly)siloxan (2) mit mindestens einem Si-gebundenen Wasserstoffatom in Gegenwart von die Anlagerung von Si-gebundenem Wasserstoff an aliphatische Mehr fachbindung förderndem Katalysator (3) angelagert wird, und dann

in einer 2. Stufe

die Alkenolgruppen des in der 1. Stufe erhaltenen Organo(poly)siloxans mit Maleinsäureanhydrid oder substituiertem Maleinsäureanhydrid gegebenenfalls in Gegenwart von saurem Katalysator umgesetzt werden, wobei Wasser intramolekular aus den Alkenolgruppen abgespalten und Maleinsäureanhydrid oder substituiertes Maleinsäureanhydrid dann entsprechend einer Diels-Alder-Reaktion daran addiert wird, und gegebenenfalls

in einer 3. Stufe

das nach Beendigung der 2. Stufe vorliegende, Anhydridgruppen aufweisende Organo(poly)siloxan mit Organopolysiloxan (4) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten äquilibriert wird.

4. Verfahren nach einem oder mehreren der Ansprüche 1 bis 3, dadurch gekennzeichnet, daß als sekundärer oder tertiärer acetylenischer Alkohol (I) solcher der allgemeinen Formel
$HC{\equiv}C\text{-}C\text{-}(OH)R^1\text{-}CHR^2R^3$ ,
wobei $R^1$ ein Wasserstoffatom oder einen einwertigen, gegebenenfalls halogenierten Kohlenwasserstoffrest mit 1 bis 12 Kohlenstoffatom(en) je Rest und $R^2$ ein Wasserstoffatom oder einen einwertigen Kohlenwasserstoffrest mit 1 bis 12 Kohlenstoffatom(en) je Rest bedeutet oder die beiden Reste $R^1$ und $R^2$ zusammen einen zweiwertigen Kohlenwasserstoffrest mit 3 bis 5 Kohlenstoffatomen je Rest darstellen,
$R^3$ ein Wasserstoffatom oder einen einwertigen Kohlenwasserstoffrest mit 1 bis 4 Kohlenstoffatom(en) je Rest bedeutet, mit der Maßgabe, daß $R^3$ ein Wasserstoffatom ist, wenn die beiden Reste $R^1$ und $R^2$ zusammen einen zweiwertigen Kohlenwasserstoffrest mit 3 bis 5 Kohlenstoffatomen je Rest darstellen, verwendet wird.

5. Verfahren nach Anspruch 4, dadurch gekennzeichnet, daß als sekundärer oder tertiärer acetylenischer Alkohol (1) 2-Methyl-3-butin-2-ol verwendet wird.

6. Verwendung der nach einem oder mehreren der Ansprüche 1 bis 5 hergestellten anhydridfunktionellen Organopolysiloxane zur Herstellung von Organopolysiloxan-Polyimid-Copolymeren.

7. Verwendung der nach einem oder mehreren der Ansprüche 1 bis 5 hergestellten anhydridfunktionellen Organopolysiloxane als Härtungsmittel für Epoxyharz.